# EUROPÄISCHE PATENTSCHRIFT

(11) **EP 2 974 583 B1**
(45) Veröffentlichungstag und Bekanntmachung des Hinweises auf die Patenterteilung: **15.11.2017**
(21) Anmeldenummer: 14177500.7
(22) Anmeldetag: 17.07.2014
(51) Int. Cl.: A01C 7/04

(54) **Säherz und Einzelkornsämaschine**
Single seed meter and single grain seeder
Unité doseuse et semeuse mono-graine

(43) Veröffentlichungstag der Anmeldung: 20.01.2016
(73) Patentinhaber: Kverneland AS, 4355 Kvernaland (NO)
(72) Erfinder: Schumacher, Ferdinand, 59510 Lippetal-Oestinghausen (DE)
(74) Vertreter: Schweiger, Johannes

(56) Entgegenhaltungen:
- EP-A2- 0 356 771
- WO-A1-2009/003257
- WO-A2-2012/129442

## Beschreibung

Die vorliegende Erfindung betrifft ein Säherz für eine Einzelkornsämaschine, aufweisend eine Säscheibe mit Sälöchern und eine Reinigungseinrichtung zur Reinigung der Sälöcher sowie eine Einzelkornsämaschine mit einem solchen Säherz.

Solche Säherzen bzw. Einzelkornsämaschinen sind aus dem Stand der Technik bekannt.

Bekannte Säherzen für, insbesondere pneumatische, Einzelkornsämaschinen bestehen in der Regel aus zwei Teilen, nämlich einem hinteren Teil, in welchem die Lagerung der Säscheibe und ein Unterdruckbereich untergebracht sind, und einem vorderen Teil, in welchen der untere Ausgang eines Saatgutbehälters mündet und der selbst einen Saatgutspeicher aufweist.

Die Druckschrift WO 2012/129442 A2 offenbart ein Säherz gemäß dem Oberbegriff des Anspruchs 1. Um die Säscheibe für die erneute Belegung mit Saatgut vorzubereiten, werden, insbesondere bei sehr kleinem und/oder feinem Saatgut, die Sälöcher in der Säscheibe mit Überdruck gereinigt. Zu diesem Zweck ist auf der Rückseite der Säscheibe eine Düse dicht anliegend an der Säscheibe so angebracht, dass Druckluft durch jedes Säloch geblasen werden kann, um die Sälöcher von Saatgutresten zu befreien.

Die Düse unterliegt einerseits dem Verschleiß, da sie durch die rotierende Säscheibe abgetragen wird. Außerdem setzt sich die Düse sehr schnell zu, da sie zum Beispiel durch Verschmutzungen in der Druckluft, durch Abrieb,

Beize oder Verunreinigungen an der Säscheibe beeinträchtigt wird. Ein weiterer Nachteil besteht darin, dass die Reinigungswirkung der Düse, insbesondere nach längerem Gebrauch, unbefriedigend ist.

Aufgabe der vorliegenden Erfindung ist es daher, ein Säherz und eine Einzelkornsämaschine mit einer verbesserten Reinigungswirkung vorzusehen.

Diese Aufgabe wird mit dem Säherz und der Einzelkornsämaschine gemäß den Ansprüchen 1 und 14 gelöst.

Vorteilhafte Weiterbildungen der Erfindung sind in den Unteransprüchen angegeben.

Das Säherz weist folgende Merkmale auf:
- eine in einer Rotationsrichtung rotierbare Säscheibe,
- die Säscheibe weist Sälöcher in definierter Anordnung auf,
- einen Aufnahmebereich zur Aufnahme des Saatguts in die Sälöcher und einen Abgabebereich zur Abgabe des Saatguts,
- zwischen dem Abgabebereich und dem Aufnahmebereich ist eine Reinigungseinrichtung zur Reinigung der Sälöcher während des Betriebs des Säherzes vorgesehen.

Erfingdungsgemäß ist die Reinigungseinrichtung als drehbares Rad mit mindestens einem in die Sälöcher eingreifenden Vorsprung ausgebildet. Durch den mindestens einen eingreifenden Vorsprung kann vorteilhaft eine besonders gründliche Reinigung der Sälöcher erreicht werden. Insbesondere kann der mindestens eine Vorsprung die Saatgutreste aus den Sälöcher herausstoßen und/oder die Saatgutreste von den Sälöcher abstreifen, beispielsweise Beize, mit der Saatgut imprägniert ist, wobei die Beize sich vom Saatgut lösen und dadurch die Löcher verstopfen kann.

Saatgut im Rahmen der vorliegenden Erfindung umfasst beispielsweise Dünger, Samenkörner, pilliert oder nackt, etc.

Der grundsätzliche Aufbau und die prinzipielle Funktionsweise des Säherzes bzw. der Einzelkornsämaschine sind aus der Druckschrift EP 2 341 765 bekannt. Es ist gemäß einer bevorzugten Ausführungsform vorgesehen, dass das Rad durch zumindest zeitweisen Kontakt mit der Säscheibe antreibbar ist. Es kann insbesondere vorgesehen sein, dass die Säscheibe das Rad antreibt, indem der mindestens eine Vorsprung von den Sälöcher mitgenommen wird. Durch die Drehung der Säscheibe wird das Rad weitergedreht bzw. mitgedreht. Dadurch kann die Rotation der Säscheibe dazu benutzt werden, das Rad zu drehen, so dass vorteilhaft kein eigener Antrieb des Rades erforderlich ist und Energie eingespart werden kann. Alternativ kann es vorgesehen sein, dass das Rad durch einen eigenen Antrieb, zum Beispiel hydraulisch und/oder elektrisch, gedreht wird.

Die Sälöcher können insbesondere auf einer Kreisbahn oder auf mehreren Kreisbahnen in der Säscheibe angeordnet sein, wobei das Rad auf einem Teilkreisbereich der Kreisbahn bzw. einer der Kreisbahnen angeordnet ist. Das Säherz kann gemäß einer bevorzugten Ausführungsform mehrere Räder mit jeweils mindestens einem Vorsprung aufweisen. Insbesondere falls die Sälöcher auf mehreren Kreisbahnen in der Säscheibe angeordnet sind, kann mehreren Kreisbahn jeweils ein solches Rad zugeordnet werden. Dies hat den Vorteil, dass auch bei einer Säscheibe mit mehreren Kreisbahnen aus Sälöchern eine effiziente Reinigung durch mehrere erfindungsgemäße Räder erfolgen kann.

Erfindungsgemäß greift der mindestens eine Vorsprung in die Sälöcher ein, wobei sich insbesondere der mindestens eine Vorsprung beim Eingriff zumindest teilweise, insbesondere mit seiner Spitze bzw. seinem vorderen Ende, innerhalb der Sälöcher befindet. Es ist bevorzugt, dass der mindestens eine Vorsprung die Sälöcher zumindest teilweise durchstößt. Mit anderen Worten: Der mindestens eine Vorsprung durchquert zumindest mit seiner Spitze bzw. seinem vorderen Ende die Sälöcher vollständig. Durch dieses Durchstoßen kann vorteilhaft eine besonders gute Reinigung der Sälöcher von Saatgutresten erfolgen.

Der mindestens eine Vorsprung kann grundsätzlich jeglichen Querschnitt aufweisen, also insbesondere einen runden, kreisförmigen, ovalen, dreieckigen, viereckigen, quadratischen, rechteckigen, fünfeckigen, sechseckigen, mehreckigen usw. Querschnitt aufweisen. Der mindestens eine Vorsprung kann über seine Länge einen konstanten Querschnitt aufweisen, bevorzugt weist der mindestens eine Vorsprung aber einen über seine Länge veränderliche, insbesondere abnehmenden, Querschnitt auf.

Es ist erfindungsgemäß vorgesehen, dass der mindestens eine Vorsprung nach außen hin, d.h. von der Drehachse des Rades weg, verjüngt spitz zulaufend bzw. stachelförmig, ausgebildet ist. Dadurch kann vorteilhaft ein besonders effizientes Ausstoßen von Saatgutresten erreicht werden. Außerdem ist es bevorzugt vorgesehen, dass der, insbesondere maximale, Querschnitt des mindestens einen Vorsprungs kleiner ist als der, insbesondere minimale, Querschnitt der Sälöcher. Dadurch kann vorteilhaft erreicht werden, dass der mindestens eine Vorsprung - insbesondere mit seiner gesamten Länge - besonders weit, insbesondere mindestens ein Drittel, vorzugsweise mindestens die Hälfte, der Sälochtiefe, in die Sälöcher eingreift. Besonders bevorzugt ist es, dass der mindestens eine Vorsprung einen kreisförmigen Querschnitt aufweist. Ganz besonders bevorzugt ist es, dass der mindestens eine Vorsprung kreiskegelförmig ausgebildet ist, wobei insbesondere die Spitze des Kreiskegels von der Drehachse des Rades weg zeigt. Dadurch kann eine besonders effiziente Reinigung erreicht werden, insbesondere für den Fall, dass die Sälöcher mit einem kreisförmigen Querschnitt ausgebildet sind.

Der mindestens eine Vorsprung kann, insbesondere einstückig, aus dem Material des Rades ausgeformt und insbesondere integraler Bestandteil des Rades sein. Alternativ kann der mindestens eine Vorsprung als separates Bauteil ausgebildet und insbesondere an der Oberfläche des Rades, insbesondere durch Kleben, Schweißen. Löten oder ähnliche Verfahren, befestigt sein.

Gemäß einer besonders bevorzugten Ausführungsform ist es vorgesehen, dass das Rad, insbesondere mit seinem Außenumfang, auf der, insbesondere stirnseitigen, Oberfläche der Säscheibe abrollt. Dadurch ist eine besonders gute Kraftübertragung zwischen Säscheibe und Rad erreichbar. Es kann insbesondere vorgesehen sein, dass der mindestens eine Vorsprung am Außenumfang des, insbesondere kreisscheibenförmig ausgebildeten, Rades angeordnet ist. Weiterhin ist es bevorzugt vorgesehen, dass die Drehachse des Rades senkrecht zur Drehachse der Säscheibe angeordnet ist. Dadurch ist vorteilhaft eine besonders kompakte Bauweise des Säherzes möglich.

Weiterhin ist es bevorzugt vorgesehen, dass sich die Säscheibe und das Rad mit derselben Winkelgeschwindigkeit drehen. Dadurch ist eine besonders gute Abstimmung der Drehung des Rades auf die Drehung der Säscheibe möglich.

Weiterhin ist erfindungsgemäß vorgesehen, dass das Rad auf der einer Saugkammer bzw. einem Unterdruckbereich des Säherzes abgewandten Seite der Säscheibe angeordnet ist. Dadurch ist vorteilhaft erreichbar, dass die Vorsprünge die Saatgutreste aus dem Säloch herausdrücken und der Unterdruck in der Saugkammer die Saatgutreste vom Säloch absaugt, so dass vorteilhaft eine verbesserte Reinigung erreicht werden kann.
In einer anderen bevorzugten Ausführungsform weist das Säherz eine Anpresseinrichtung auf, die das Rad auf die Oberfläche, insbesondere auf die Stirnfläche, der Säscheibe drückt. Die Anpresseinrichtung kann insbesondere mindestens eine Druckfeder aufweisen, die eine Druckkraft auf das Rad in Richtung der Oberfläche der Säscheibe ausübt. Dadurch ist vorteilhaft erstens eine besonders effiziente Reinigung und zweitens eine verbesserte Kraftübertragung zwischen Säscheibe und Rad erreichbar.
Es ist weiterhin bevorzugt vorgesehen, dass das Rad eine Vielzahl an Vorsprüngen aufweist, die insbesondere gleichmäßig voneinander beabstandet sind, wobei insbesondere der Abstand benachbarter Vorsprünge dem Abstand benachbarter Sälöcher entspricht. Es kann insbesondere vorgesehen sein, dass im Betrieb die Vorsprünge nacheinander in aufeinanderfolgende Sälöcher eingreifen. Außerdem kann es bevorzugt vorgesehen sein, dass die Vorsprünge in Umfangsrichtung über den gesamten Außenumfang des Rades, insbesondere äquidistant, verteilt angeordnet sind.
Gemäß einer anderen bevorzugten Ausführungsform ist es vorgesehen, dass im Betrieb von der Vielzahl an Vorsprüngen stets mindestens ein Vorsprung mit einem Säloch in Eingriff steht. Dadurch kann vorteilhaft eine besonders effiziente Reinigung der Sälöcher und eine besonders gute Kraftübertragung erreicht werden. Weiterhin kann es bevorzugt vorgesehen sein, dass im Betrieb zumindest zeitweise mindestens zwei Vorsprünge mit jeweils einem Säloch in Eingriff stehen. Dadurch kann erstens die Reinigung noch weiter verbessert werden und zweitens die Kraftübertragung noch effizienter gestaltet werden.

Das Rad weist bevorzugt mindestens fünf Vorsprünge, besonders bevorzugt mindestens zehn, ganz besonders bevorzugt mindestens fünfzehn Vorsprünge auf.

Die Vorsprünge können, insbesondere hinsichtlich ihrer Länge, Form, ihres Querschnitts, Materials usw., identisch ausgebildet sein. Alternativ können die Vorsprüngen unterschiedlich ausgebildet sein.

Ein weiterer Gegenstand der vorliegenden Erfindung betrifft eine Einzelkornsämaschine, aufweisend ein Säherz nach einer der zuvor beschriebenen Ausführungsformen. Zu den Vorteilen und beispielhaften Weiterbildungen wird auf die obigen Ausführungen verwiesen.

Weitere Vorteile, Merkmale und Einzelheiten der Erfindung ergeben sich aus der nachfolgenden Beschreibung bevorzugter Ausführungsbeispiele sowie an Hand der Zeichnungen.

Es zeigen schematisch:
Figur 1a ein Säherz gemäß einer beispielhaften Ausführungsform der vorliegenden Erfindung,
Figur 1b das Säherz aus Figur 1a in einer perspektivischen Ansicht,
Figur 2 eine vergrößerte Ansicht des Säherzes aus Figur 1b.
Figur 3a eine Schnittansicht des Säherzes aus Figur 1a,
Figur 3b eine vergrößerte Ansicht des Säherzes aus Figur 3a und
Figur 4 eine detaillierte Ansicht des Säherzes aus der Figur 1.

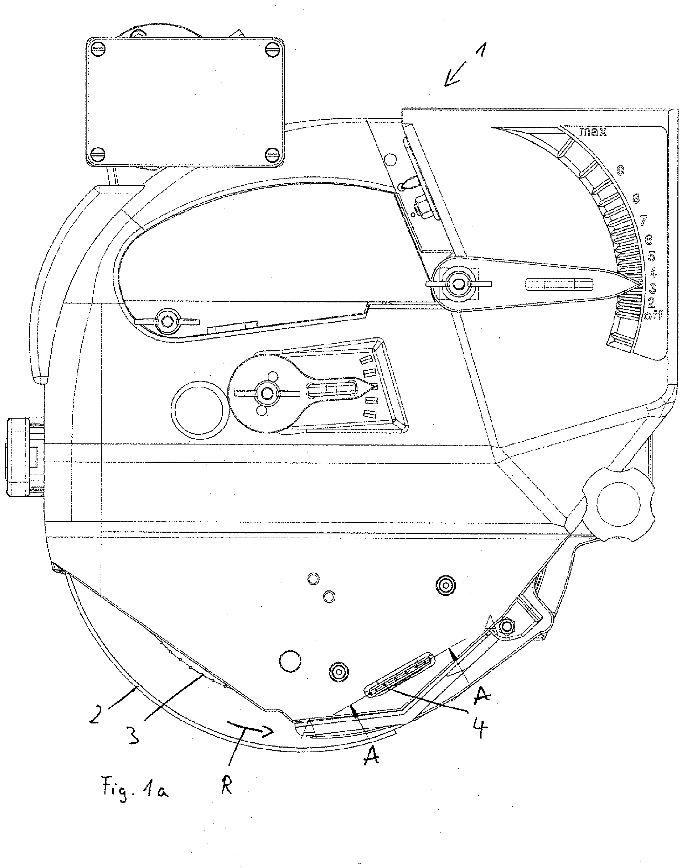

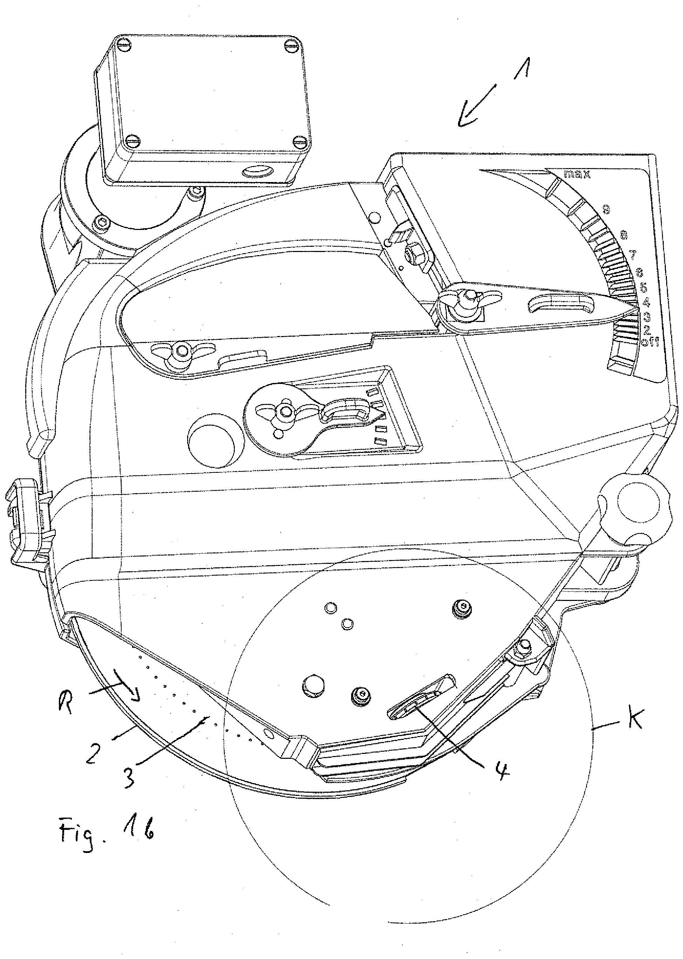

Figur 1a zeigt schematisch ein Säherz 1 gemäß einer beispielhaften Ausführungsform der vorliegenden Erfindung in einer Seitenansicht. Figur 1b zeigt das Säherz 1 in einer perspektivischen Ansicht.

Der grundsätzliche Aufbau und die prinzipielle Funktionsweise des Säherzes 1 sind aus der Druckschrift EP 2 341 765 bekannt. Das Säherz 1 weist einen durch seine zwei Teile bzw. Hälften umschlossenen Arbeitsraum auf, der durch eine Säscheibe 2 in eine Druckkammer und eine Saatgutkammer unterteilt wird. Die Druckkammer ist durch einen, vorzugsweise herkömmlichen, Dichtring in einen Unterdruckbereich und einen Normaldruckbereich aufgeteilt. Im Unterdruckbereich liegt an zur Aufnahme und Abgabe von Saatgut dienenden Sälöcher 3 eine Druckdifferenz an, die im Normaidruckbereich aufgelöst wird, wodurch beim Übergang der Sälöcher 3 vom Unterdruckbereich in den Normaldruckbereich das Saatgut durch Rotationsbewegung der Säscheibe 2 in einer Rotationsrichtung (Laufrichtung) R. der Säscheibe 2 abgeworfen wird.

Der Unterdruckbereich wird von einer nicht dargestellten Pumpe oder einem Unterdruckgebläse über einen Anschluss mit Unterdruck beaufschlagt.

Die Sälöcher 3 sind auf einer Kreisbahn der Säscheibe 2 in definierten Abständen angeordnet, wobei auch mehrere Kreisbahnen mit Sälöcher 3 vorgesehen sein können.

Das Säherz 1 weist eine Reinigungseinrichtung 4 auf, die als drehbares Rad 4 mit einer Vielzahl an Vorsprüngen 5 ausgebildet ist.

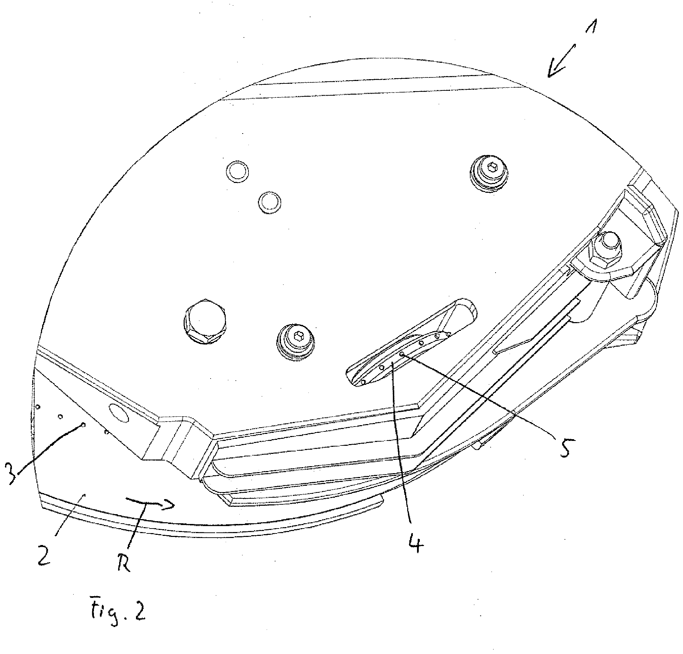

Figur 2 zeigt eine vergrößerte Ansicht eines Teils des Säherzes 1 aus der Figur 1b. Figur 2 zeigt denjenigen Bereich des Säherzes 1, der in der Figur 1b durch den Kreis K gekennzeichnet ist. Das Rad 4 weist eine Vielzahl an Vorsprüngen 5 auf. Die Vorsprünge 5 sind am Außenumfang des Rades 4 angeordnet.

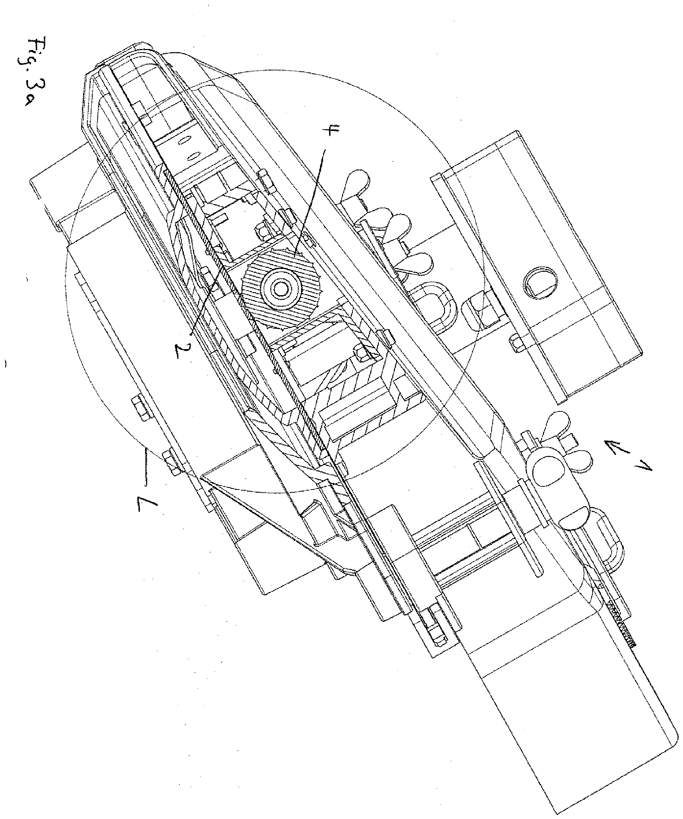

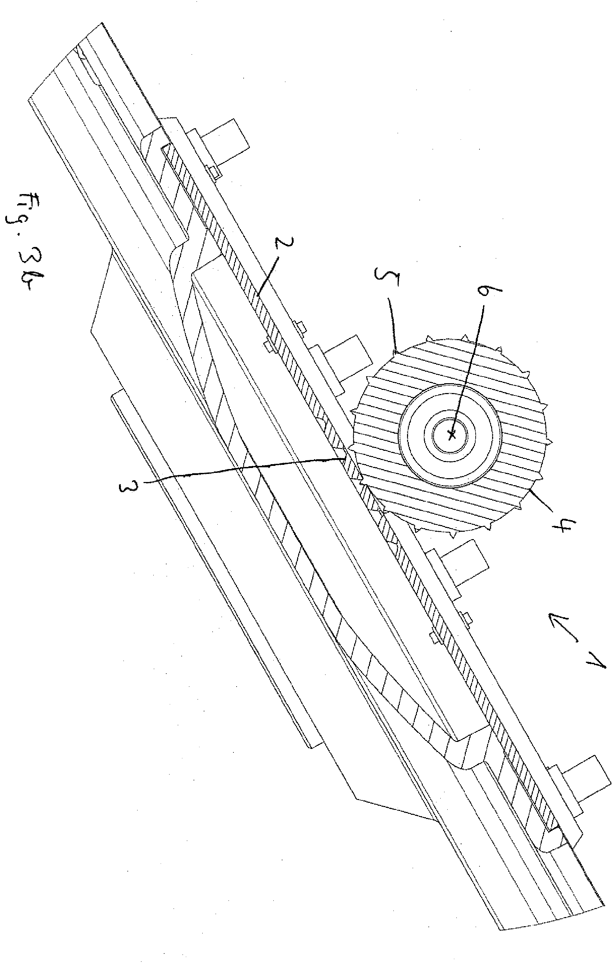

Figur 3a zeigt schematisch eine Schnittansicht des Säherzes 1 im Bereich des Rades 4. Der Schnitt verläuft entlang der Linie A-A, die in der Figur 1a eingezeichnet ist. Figur 3b zeigt schematisch eine vergrößerte Ansicht des Säherzes aus Figur 3a. Figur 3b zeigt denjenigen Bereich des Säherzes 1, der in der Figur 3a durch den Kreis L gekennzeichnet ist. Das Rad 4 dreht sich um eine Drehachse 6, die senkrecht zur Drehachse der Säscheibe 2 angeordnet ist. Die Vorsprünge 5 greifen in die Sälöcher 3 ein. Die Vorsprünge 5 sind spitz zulaufend ausgebildet, um eine besonders gute Reinigungswirkung zu erzielen. Das Rad 4 wird durch die Drehbewegung der Säscheibe 2 angetrieben, wobei durch den Kontakt der Vorsprünge 5 mit den Rändern der Sälöcher 3 die Kraft von der Säscheibe 2 auf das Rad 4 übertragen wird. In den Figuren 3a und 3b ist ein Zustand dargestellt, in dem lediglich ein einziger Vorsprung 5 in ein Säloch 3 eingreift.

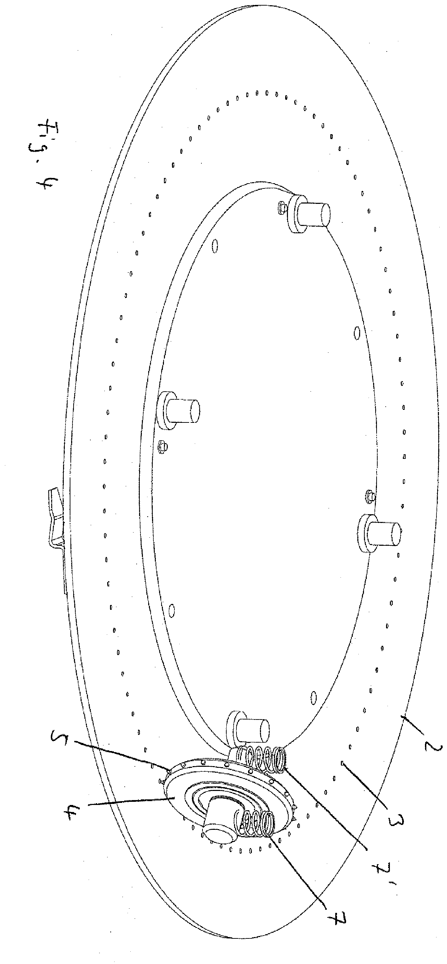

Figur 4 zeigt schematisch in einer Detailansicht zur besseren Darstellung lediglich Teile des Säherzen 1. Figur 4 zeigt die kreisscheibenförmig ausgebildete Säscheibe 2 mit den Sälöcher 3 und das Rad 4. Die Sälöcher 3 verlaufen auf einer Kreisbahn in der Säscheibe 2. Auf einem Teilbereich dieser Kreisbahn ist das Rad 4 mit den Vorsprünge 5 angeordnet. Das Rad 4 steht senkrecht auf der Oberfläche der Säscheibe 2. In Betrieb greifen die am Außenumfang des Rades 4 angeordneten Vorsprünge 5 nacheinander in aufeinanderfolgende Sälöcher 3 ein. Die Vorsprünge 5 sind in gleichem Abstand voneinander beabstandet und verlaufen über den gesamten Außenumfang des Rades 4, das heißt die Vorsprünge 5 sind über den gesamten Außenumfang des Rades 4 verteilt angeordnet. Das Säherz 1 weist weiterhin zwei Federn 7, 7' auf, die das Rad 4 auf die Oberfläche der Säscheibe 2 drücken. Dadurch wird erstens eine verbesserte Reinigungswirkung und zweitens eine verbesserte Kraftübertragung von der Säscheibe 2 auf das Rad 4 erreicht.

Die obig beschriebenen Ausführungsbeispiele dienen lediglich der Illustration der Erfindung und sollen den Gegenstand der Erfindung keinesfalls einschränken.

### Säherz und Einzelkornsämaschine

### Bezugszeichenliste

- 1: Säherz
- 2: Säscheibe
- 3: Sälöcher
- 4: Rad
- 5: Vorsprünge
- 6: Drehachse
- 7.7': Feder
- R: Rotationsrichtung
- K, L: Kreis

## Patentansprüche

1. Säherz (1) für eine Einzelkornsämaschine mit folgenden Merkmalen:
- eine in einer Rotationsrichtung (R) rotierbare Säscheibe (2),
- die Säscheibe (2) weist Sälöcher (3) in definierter Anordnung auf,
- einen Aufnahmebereich zur Aufnahme des Saatguts in die Sälöcher (3) und einen Abgabebereich zur Abgabe des Saatguts,
- zwischen dem Abgabebereich und dem Aufnahmebereich ist eine Reinigungseinrichtung (4) zur Reinigung der Sälöcher (3) während des Betriebs des Säherzes (1) vorgesehen,
wobei
die Reinigungseinrichtung (4) als drehbares Rad (4) mit mindestens einem in die Sälöcher (3) eingreifenden Vorsprung (5) ausgebildet ist, **dadurch gekennzeichnet, dass** das Rad (4) auf der einer Saugkammer des Säherzes (1) abgewandten Seite der Säscheibe (2) angeordnet ist, wobei der mindestens eine Vorsprung (5) nach außen hin verjüngt spitz zulaufend ausgebildet ist.

2. Säherz (1) nach Anspruch 1, **dadurch gekennzeichnet, dass** das Rad (4) durch zumindest zeitweisen Kontakt mit der Säscheibe (2) antreibbar ist.

3. Säherz (1) nach einem der vorhergehenden Ansprüche, **dadurch gekennzeichnet, dass** der mindestens eine Vorsprung (5) die Sälöcher (3) zumindest teilweise durchstößt.

4. Säherz (1) nach einem der vorhergehenden Ansprüche, **dadurch gekennzeichnet, dass** der mindestens eine Vorsprung (5) kreiskegelfärmig ausgebildet ist.

5. Säherz (1) nach einem der vorhergehenden Ansprüche, **dadurch gekennzeichnet, dass** der, insbesondere maximale, Querschnitt des mindestens einen Vorsprungs (5) kleiner ist als der, insbesondere minimale, Querschnitt der Sälöcher (3).

6. Säherz (1) nach einem der vorhergehenden Ansprüche, **dadurch gekennzeichnet, dass** der mindestens eine Vorsprung (5) einen kreisförmigen Querschnitt aufweist.

7. Säherz (1) nach einem der vorhergehenden Ansprüche, **dadurch gekennzeichnet, dass** der mindestens eine Vorsprung (5) am Außenumfang des, insbesondere kreisscheibenförmig ausgebildeten, Rades (4) angeordnet ist.

8. Säherz (1) nach einem der vorhergehenden Ansprüche, **dadurch gekennzeichnet, dass** die Drehachse (6) des Rades (4) senkrecht zur Drehachse der Säscheibe (2) angeordnet ist.

9. Säherz (1) nach einem der vorhergehenden Ansprüche, **dadurch gekennzeichnet, dass** das Säherz (1) eine, insbesondere federbeaufschlagte, Anpresseinrichtung (7, 7') aufweist, die das Rad (4) auf die Oberfläche der Säscheibe (2) drückt.

10. Säherz (1) nach einem der vorhergehenden Ansprüche, **dadurch gekennzeichnet, dass** das Rad (4), insbesondere mit seinem Außenumfang, auf der, insbesondere stirnseitigen, Oberfläche der Säscheibe (2) abrollt.

11. Säherz (1) nach einem der vorhergehenden Ansprüche, **dadurch gekennzeichnet, dass** das Rad (4) eine Vielzahl an Vorsprüngen (5) aufweist, die insbesondere gleichmäßig voneinander beabstandet sind, wobei insbesondere der Abstand benachbarter Vorsprünge (5) dem Abstand benachbarter Sälöcher (3) entspricht.

12. Säherz (1) nach Anspruch 11, **dadurch gekennzeichnet, dass** von der Vielzahl an Vorsprüngen (5) im Betrieb stets mindestens ein Vorsprung (5) mit einem Säloch (3) in Eingriff steht.

13. Säherz (1) nach einem der Ansprüche 11 oder 12, **dadurch gekennzeichnet, dass** im Betrieb zumindest zeitweise mindestens zwei Vorsprünge (5) mit jeweils einem Säloch (3) in Eingriff stehen.

14. Einzelkornsämaschine mit einem Säherz (1) nach einem der vorhergehenden Ansprüche.

## Claims

1. A sowing heart (1) for a single-seed drill having the following features:
- a sowing disk (2) rotatable in one direction (R) of rotation,
- the sowing disk (2) has sowing holes (3) in a defined arrangement,
- a receiving region for receiving the seed into the sowing holes (3) and a delivery region for delivery of the seed,
- a cleaning device (4) for cleaning the sowing holes (3) during operation of the sowing heart (1) is provided between the delivery region and the receiving region,
wherein the cleaning device (4) is formed as a rotating wheel (4) having at least one projection (5) which engages in the sowing holes (3), **characterized in that** the wheel (4) is disposed on a side of the sowing disk (2) facing away from a suction chamber of the sowing heart (1), wherein the at least one projection (5) is configured to taper outwards towards a tip.

2. The sowing heart (1) according to claim 1, **characterized in that** the wheel (4) can be driven by at least temporary contact with the sowing disk (2).

3. The sowing heart (1) according to any one of the preceding claims, **characterized in that** the at least one projection (5) at least partially punches through the sowing holes (3).

4. The sowing heart (1) according to any one of the preceding claims, **characterized in that** at least one projection (5) is configured as a circular cone.

5. The sowing heart (1) according to any one of the preceding claims, **characterized in that** the, in particular maximum, cross-section of at least one projection (5) is smaller than the, in particular minimum, cross-section of the sowing holes (3).

6. The sowing heart (1) according to any one of the preceding claims, **characterized in that** the at least one projection (5) has a circular cross-section.

7. The sowing heart (1) according to any one of the preceding claims, **characterized in that** the at least one projection (5) is located on the outer circumference of the wheel (4), which is in particular configured as circular-disk-shaped.

8. The sowing heart (1) according to any one of the preceding claims, **characterized in that** the axis of rotation (6) of the wheel (4) is located perpendicular to an axis of rotation of the sowing disk (2).

9. The sowing heart (1) according to any one of the preceding claims, **characterized in that** the sowing heart (1) comprises an, in particular spring-loaded, pressing device (7, 7') which presses the wheel (4) onto the surface of the sowing disk (2).

10. The sowing heart (1) according to any one of the preceding claims, **characterized in that** the wheel (4), rolls along the in particular front-end, surface of the sowing disk (2) with its outer circumference.

11. The sowing heart (1) according to any one of the preceding claims, **characterized in that** the wheel (4) has a plurality of projections (5) which are spaced apart from one another in particular uniformly, wherein in particular the distance between adjacent projections (5) corresponds to the distance between adjacent sowing holes (3).

12. The sowing heart (1) according to claim 11, **characterized in that** at least one projection (5) of the plurality of projections (5) in operation always engages with one sowing hole (3).

13. The sowing heart (1) according to any one of claims 11 or 12, **characterized in that** during operation at least temporarily at least two projections (5) engage with respectively one sowing hole (3).

14. Single-seed drill having a sowing heart (1) according to any one of the preceding claims.

## Revendications

1. Coeur semeur (1) pour un semoir monograine comprenant les attributs suivants :
- un disque semeur (2) rotatif dans un sens de rotation (R),
- le disque semeur (2) présente des trous semeurs (3) dans un agencement défini,
- un espace de réception pour recevoir les semences dans les trous semeurs (3) et une zone de transfert pour transférer les semences,
- un dispositif de nettoyage (4) est disposé entre l'espace de transfert et l'espace de réception pour nettoyer les trous semeurs (3) pendant le fonctionnement du coeur semeur (1),
dans lequel
le dispositif de nettoyage (4) est conçu en tant que roue rotative (4) comprenant au moins une saillie (5) se mettant en prise dans les trous semeurs (3), **caractérisé en ce que** la roue (4) est disposée sur le côté du disque semeur (2) détourné d'une chambre d'aspiration du coeur semeur (1), dans lequel l'au moins une saillie (5) est conçu en s'amincissant en pointe vers l'extérieur.

2. Coeur semeur (1) selon la revendication 1, **caractérisé en ce que** la roue (4) peut être entraînée par au moins un contact périodique avec le disque semeur (2).

3. Coeur semeur (1) selon l'une des revendications précédentes, **caractérisé en ce que** l'au moins une saillie (5) passe au moins partiellement à travers les trous semeurs (3).

4. Coeur semeur (1) selon l'une des revendications précédentes, **caractérisé en ce que** l'au moins une saillie (5) est conçue en forme de cône de révolution.

5. Coeur semeur (1) selon l'une des revendications précédentes, **caractérisé en ce que** la section transversale, en particulier maximale, de l'au moins une saillie (5) est inférieure à la section transversale, en particulier minimale, des trous semeurs (3).

6. Coeur semeur (1) selon l'une des revendications précédentes, **caractérisé en ce que** l'au moins une saillie (5) présente une section transversale en cône de révolution.

7. Coeur semeur (1) selon l'une des revendications précédentes, **caractérisé en ce que** l'au moins une saillie (5) est disposée sur le pourtour extérieur de la roue (4) formée en particulier en forme de cône de révolution.

8. Coeur semeur (1) selon l'une des revendications précédentes, **caractérisé en ce que** le pivot (6) de la roue (4) est disposé verticalement au pivot du disque semeur (2).

9. Coeur semeur (1) selon l'une des revendications précédentes, **caractérisé en ce que** le coeur semeur (1) présente un dispositif de compression (7, 7'), en particulier sur ressorts, qui appuie la roue (4) sur la surface du disque semeur (2).

10. Coeur semeur (1) selon l'une des revendications précédentes, **caractérisé en ce que** la roue (4) se déroule sur la surface, en particulier avant, du disque semeur (2), en particulier par son pourtour extérieur.

11. Coeur semeur (1) selon l'une des revendications précédentes, **caractérisé en ce que** la roue (4) présente une pluralité de saillies (5) qui sont en particulier espacées régulièrement l'une de l'autre, dans lequel en particulier, l'écart entre des saillies (5) voisines correspond à l'écart de trous semeurs (3) voisins.

12. Coeur semeur (1) selon la revendication 11, **caractérisé en ce que** de la pluralité de saillies (5), au moins une saillie (5) est toujours en prise avec un trou semeur (3) en fonctionnement.

13. Coeur semeur (1) selon l'une des revendications 11 ou 12, **caractérisé en ce qu'**en fonctionnement, au moins périodiquement, au moins deux saillies (5) sont en prise avec respectivement un trou semeur (3).

14. Semoir monograine comprenant un coeur semeur (1) selon l'une des revendications précédentes.
